# FASCICULE DE BREVET EUROPEEN

(11) **EP 4 505 083 B1**
(45) Date de publication et mention de la délivrance du brevet: **15.07.2026**
(21) Numéro de dépôt: 23704360.9
(22) Date de dépôt: 15.02.2023
(51) Int. Cl.: F16B 5/06, F16B 21/08, F24S 25/634, H02S 20/23, F24S 25/60

(54) **KIT D'ATTACHE D'UN PANNEAU POURVU D'UNE PIÈCE DE MAINTIEN ET D'UN ÉLÉMENT DE SERRAGE ET PIÈCE DE MAINTIEN DUDIT KIT D'ATTACHE**
KIT ZUR BEFESTIGUNG EINER PLATTE MIT EINEM HALTETEIL UND EINEM KLEMMELEMENT SOWIE HALTETEIL DES BEFESTIGUNGSKITS
KIT FOR FASTENING A PANEL, PROVIDED WITH A HOLDING PART AND A CLAMPING ELEMENT AND CLAMPING ELEMENT OF THE FASTENING KIT

(30) Priorité: 06.04.2022 FR 2203149
(43) Date de publication de la demande: 12.02.2025
(73) Titulaire: A. RAYMOND ET CIE, 38000 Grenoble (FR)
(72) Inventeur: LEGALL, Antoine, 38600 Fontaine (FR); LOCATELLI, Julien, 38500 Voiron (FR)
(74) Mandataire: IP Trust
(86) Numéro de dépôt international: PCT/EP2023/053786
(87) Numéro de publication internationale: WO 2023/193984

(56) Documents cités:
- EP-A1- 3 842 707
- DE-A1- 102011 114 935
- US-A1- 2021 396 255

## Description

### DOMAINE DE L'INVENTION

La présente invention se rapporte au domaine des moyens de fixation, et plus particulièrement des moyens de fixation de panneaux, par exemple des panneaux solaires, sur des rails.

Notamment, l'invention concerne une pièce de maintien et un élément de serrage permettant de fixer des panneaux sur des rails. En particulier, la pièce de maintien et l'élément de serrage sont configurés pour permettre le serrage du panneau contre le rail.

### ARRIERE PLAN TECHNOLOGIQUE DE L'INVENTION

Le document US9160273 divulgue un kit de fixation pour fixer un panneau, et notamment un panneau solaire, sur un rail. A cet égard, et tel qu'illustré à la [Fig.7] du document US9160273, le kit de fixation comprend un élément de maintien 31, un boulon 30 et un élément glissière 1.

En fonctionnement, l'assemblage formé par ces trois éléments est disposé entre deux panneaux adjacents reposant sur un rail 8. Plus particulièrement, l'assemblage comprend, dans l'ordre et à partir du rail, l'élément glissière 1, le boulon 30 et l'élément de maintien 31. L'élément de maintien 31 comprend une plaque métallique pourvue de bords opposés, dits bords de maintien, et destinés chacun à être maintenus serrés contre une partie périphérique supérieure 36 du cadre de deux panneaux adjacents. L'élément glissière 1 est en liaison glissière avec le rail 8 et le boulon 30 permettent d'assurer le serrage des deux bords de maintien. Notamment, le boulon 30, traversant l'élément de maintien, est vissé dans un trou taraudé d'une portion supérieure de l'élément glissière 1, afin de permettre le serrage de l'élément de maintien contre chacun de deux panneaux adjacents.

Toutefois, ce kit de fixation mettant en œuvre un serrage au moyen d'un boulon ou d'une vis n'est pas satisfaisant.

En effet, le boulon peut, au cours du temps et par exemple sous l'effet des variations de température, se desserrer. Ce desserrage a pour effet de réduire l'effort de maintien exercé par l'élément de maintien sur le panneau, et peut ultimement conduire à une dé-solidarisation dudit panneau et du rail. Par effet d'entrainement, les panneaux adjacents peuvent également voir leur accroche au rail réduite et à leur tour se désolidariser dudit rail..

Par ailleurs, l'élément glissière, peu accessible, peut difficilement être remplacé en cas nécessité.

Le document EP2867541 propose un appareil de fixation permettant de pallier ces problèmes. Cet appareil de fixation est notamment monobloc et est pourvu de moyens d'encliquetage destinés à coopérer avec le rail. Néanmoins, la mise en œuvre de cet appareil de fixation nécessite de considérer des rails relativement larges, et donc plus coûteux, afin d'en permettre un démontage plus aisé lorsque la situation le requiert.

Le document US 2021/396255 A1 décrit un système d'alimentation solaire comprenant au moins un ensemble de montage comportant un rail, au moins un module solaire encadré, et au moins un clip destiné à fixer le module solaire au rail. Le clip comprend au moins une paire de parois latérales s'étendant à partir d'une plaque supérieure ou d'une paroi arrière, chaque paroi latérale comprenant une fente, un renfoncement et un élément de verrouillage, au moins la fente, le renfoncement, ou les deux, comprenant un bord dentelé. Les clips peuvent fixer un module solaire au rail en couplant le cadre du module solaire au rail de l'ensemble de montage au niveau des fentes des parois latérales. Les clips peuvent être fixés à l'ensemble de montage par des éléments de verrouillage disposés à leur extrémité distale. Les clips peuvent établir une connexion de mise à la terre électrique entre le cadre du module solaire et le rail.

Un but de la présente invention est donc de proposer une pièce de maintien et un kit d'attache permettant un serrage pérenne d'un panneau contre un rail.

Un autre but de la présente invention est de proposer une pièce de maintien et un kit d'attache pour lequel l'effort d'appui est mieux réparti.

Un autre but de la présente invention est de proposer une pièce de maintien et un kit d'attache permettant de considérer des rails d'une largeur réduite.

Un autre but de la présente invention est de proposer une pièce de maintien et un kit d'attache dont le démontage reste aisé au regard des dispositifs connus de l'état de la technique.

### BREVE DESCRIPTION DE L'INVENTION

La présente invention concerne un pièce de maintien, préformée et monobloc, d'un kit d'attache destinée à maintenir un panneau serré par une de ses faces, dite face de contact, contre un rail, la pièce de maintien comprend :

Pièce de maintien, préformée et monobloc, d'un kit d'attache destinée à maintenir un panneau serré par une de ses faces, dite face de contact, contre un rail, la pièce de maintien comprend :
- une partie principale s'étendant selon un axe d'élongation A, et qui comprend une première paroi latérale, la première paroi latérale présentant une première face interne et une première face externe ainsi qu'un premier bord supérieur parallèle à l'axe d'élongation A et opposé à une face arrière de la partie principale, la partie principale comprend en outre deux parois transversales, perpendiculaires à l'axe d'élongation et qui délimitent un passage ouvert par la face arrière pour l'insertion d'un élément de serrage du kit d'attache, les parois transversales comprennent en outre un bord de maintien définissant un plan de maintien, opposé à la face arrière, et contre lequel l'élément de serrage inséré par la face arrière est destiné à exercer un effort en direction de la dite face arrière;
- une première aile latérale prolongeant latéralement la partie principale à partir du premier bord supérieur, la première aile latérale étant destinée à être en appui par une face d'appui contre une face utile du panneau opposée à la face de contact.

Selon un mode de mise en œuvre, les faces des parois transversales en regard l'une de l'autre, dites faces de guidage, comprennent chacune, du bord de maintien vers un bord d'entrée opposé au bord de maintien, une section de maintien, une section de guidage et une section d'entrée, la section de guidage est plane et perpendiculaire à l'axe d'élongation, et la section d'entrée est de forme convexe de manière à limiter tout contact entre de l'élément de serrage et une arrête dudit bord d'entrée lors de l'insertion de l'élément de serrage dans le passage par la face arrière.

Selon un mode de mise en œuvre, la section de maintien est également de forme convexe de sorte que le plan de maintien n'est pas perpendiculaire la section de guidage.

Selon un mode de mise en œuvre, la section de maintien comprend en projection par rapport au plan de maintien des pointes de contact.

Selon un mode de mise en œuvre, la première paroi latérale comprend également au moins une ailette de guidage formée par une section pliée de la première paroi latérale et agencée pour centrer et guider l'élément de serrage lors de son insertion dans le passage par la face arrière.

Selon un mode de mise en œuvre, l'au moins une ailette de guidage est orientée vers la face arrière et pliée selon une direction opposée à la première face interne.

Selon un mode de mise en œuvre, l'angle entre la première paroi latérale et la première aile latérale est inférieur à 90°.

Selon un mode de mise en œuvre, la première aile latérale comprend une ou plusieurs languettes pliées se projetant vers la face arrière, et terminées par une pointe de manière à pouvoir griffer le panneau lorsque la première aile latérale est en appui contre ledit panneau.

Selon un mode de mise en œuvre, la partie principale comprend une deuxième paroi latérale présentant une deuxième face interne et une deuxième face externe ainsi qu'un deuxième bord supérieur parallèle à l'axe d'élongation et opposé à une face arrière de la partie principale, une deuxième aile latérale est par ailleurs disposée en projection par rapport à la deuxième face externe et prolonge la deuxième paroi latérale à partir de son deuxième bord supérieur.

Selon un mode de mise en œuvre, ladite pièce de maintien est agencée de sorte que la première paroi latérale et la première aile latérale sont le symétrique, respectivement, de la deuxième paroi latérale et de la deuxième aile par rapport à un plan de symétrie médian à la première surface interne et à la deuxième surface interne.

Selon un mode de mise en œuvre, la première paroi latérale et la deuxième paroi latérale sont parallèles entre elles.

Selon un mode de mise en œuvre, les parois transversales s'étendent entre la première surface interne et la deuxième surface interne.

Selon un mode de mise en œuvre, des poutres assurent un lien mécanique fixe entre la première paroi latérale et la deuxième paroi latérale.

Selon un mode de mise en œuvre, les poutres sont disposées sur la face arrière de la partie principale.

Selon un mode de mise en œuvre, une poutre parmi les poutres, dite poutre de montage est disposée à mi-distance entre les deux parois transversales.

Selon un mode de mise en œuvre, ladite pièce de maintien comprend un fond de maintien de forme plane et qui s'étend, à partir de et perpendiculairement à la première face interne.

Selon un mode de mise en œuvre, le fond de maintien comprend une ouverture traversante.

Selon un mode de mise en œuvre, le fond de maintien relie la première face interne avec la deuxième face interne.

Selon un mode de mise en œuvre, ladite pièce de maintien comprend des moyens, dits moyens captifs, configurés pour rendre captif un boulon ou une vis inséré dans l'ouverture traversante selon un sens allant de la face avant vers la face arrière.

Selon un mode de mise en œuvre, les moyens captifs comprennent une première languette et une deuxième languette qui s'étendent selon un sens allant de la face arrière vers la face avant et en projection par rapport au fond de maintien.

L'invention concerne également un kit d'attache qui comprend :
- une pièce de maintien selon la présente invention
- et un élément de serrage monobloc destiné à coopérer avec la pièce de maintien selon la présente invention pour le serrage d'un panneau par sa face de contact contre un rail de section en U, l'élément de serrage comprenant deux montants mécaniquement solidaires l'un de l'autre et qui s'étendent, dans un plan P, chacun de leur première extrémité vers leur deuxième extrémité selon deux directions divergentes, les premières extrémités comprennent des premiers moyens d'ancrage agencées pour permettre l'accroche de l'élément de serrage avec le rail par encliquetage, tandis que les deuxièmes extrémités comprennent des deuxièmes moyens d'ancrage destinés à coopérer avec un des bords de maintien lorsque les deux montants sont insérés dans le passage par la face arrière.

L'invention concerne également un système d'attache de panneaux qui comprend au moins un kit d'attache selon la présente invention et au moins un rail de section en U.

L'invention concerne également un surface plane pourvue d'un ensemble de panneaux agencés de manière matricielle sur des rails régulièrement espacés et parallèles entres eux, chaque panneau étant serré contre un rail sur lequel il repose au moyen d'un kit d'attache selon la présente invention.

### Brève description des dessins

D'autres caractéristiques et avantages de l'invention ressortiront de la description détaillée d'une pièce de maintien selon la présente invention et d'un élément de serrage non revendiqué en soi qui va suivre en référence aux figures annexées sur lesquelles :
[Fig.1] La [Fig.1] est une représentation en perspective d'un premier exemple de réalisation d'une pièce de maintien selon la présente invention, la représentation en perspective est notamment orientée de manière à observer la première face interne et la face avant ;
[Fig.2] La [Fig.2] représente un grossissement d'une section de la pièce de maintien de la [Fig.1] selon une vue latérale permettant d'observer la première face externe ;
[Fig.3] La [Fig.3] représente la pièce de maintien de la [Fig.1] selon une vue latérale permettant d'observer dans son entièreté la première face externe ;
[Fig.4] La [Fig.4] est une représentation d'une paroi transversale de la pièce de maintien de la [Fig.1] et par une face opposée à sa face de guidage, la figue 4 représente notamment la paroi transversale sur laquelle sont formées les pointes de contact ;
[Fig.5] La [Fig.5] est une représentation en perspective d'un deuxième exemple d'une pièce de maintien selon la présente invention, la représentation en perspective est notamment orientée de manière à observer la première face externe et la face avant ;
[Fig.6] La [Fig.6] une représentation en perspective de la pièce de maintien de la [Fig.5], la représentation en perspective est notamment orientée de manière à observer la première face externe et la face arrière ;
[Fig.7] La [Fig.7] est une représentation en perspective de la pièce de maintien selon un troisième exemple de réalisation de la présente invention ;
[Fig.8] La [Fig.8] est une représentation schématique d'un élément de serrage non revendiqué en soi;
[Fig.9] La [Fig.9] est une représentation schématique d'un élément de serrage non revendiqué en soi;
[Fig.10] La [Fig.10] est une représentation schématique d'un montage, dit par le haut, de l'élément de serrage et de la pièce de maintien avec le rail en vue de maintenir serré contre ledit rail un panneau, ce montage implique notamment une pièce de maintien conforme au premier exemple et un élément de serrage conforme au premier mode de réalisation ;
[Fig.11] La [Fig.11] est une représentation schématique d'une arrête saillante susceptible d'être considérée au niveau de la première butée latérale ;
[Fig.12] La [Fig.12] est une représentation schématique d'un montage, dit par le bas, de l'élément de serrage et de la pièce de maintien avec le rail en vue de maintenir serré contre ledit rail un panneau, ce montage implique notamment une pièce de maintien conforme au premier exemple et un élément de serrage conforme au deuxième mode de réalisation ;
[Fig.13] La [Fig.13] est représentation de la mise en œuvre de la pièce de maintien selon le troisième exemple de réalisation pour le maintien d'un panneau photovoltaïque sur un rail, la pièce de maintien coopérant avec un boulon et un élément d'ancrage ;
[Fig.14] La [Fig.14] est une représentation en perspective de l'élément d'ancrage de la [Fig.13].

### DESCRIPTION DETAILLEE DE L'INVENTION

La présente invention concerne une pièce de maintien, préformée et monobloc, d'un kit d'attache destiné à maintenir un panneau, par exemple un panneau solaire sur un rail. Plus particulièrement, la pièce de maintien est destinée à maintenir le panneau serré par une de ses faces, dite face de contact, contre le rail.

A cet égard la pièce de maintien comprend :
- une partie principale s'étendant selon un axe d'élongation A, et qui comprend une première paroi latérale, la première paroi latérale présentant une première face interne et une première face externe ainsi qu'un premier bord supérieur parallèle à l'axe d'élongation A et opposé à une face arrière de la partie principale, la partie principale comprend en outre deux parois transversales, perpendiculaires à l'axe d'élongation et qui délimitent un passage ouvert par la face arrière pour l'insertion d'un élément de serrage du kit d'attache, les parois transversales comprennent en outre un bord de maintien définissant un plan de maintien, opposé à la face arrière, et contre lequel l'élément de serrage inséré par la face arrière est destiné à exercer un effort en direction de la dite face arrière ;
- une première aile latérale prolongeant latéralement la partie principale à partir du premier bord supérieur, la première aile latérale étant destinée à être en appui par une face d'appui contre une face utile du panneau opposée à la face de contact.

Décrit est également un élément de serrage monobloc destiné à coopérer avec la pièce de maintien pour le serrage d'un panneau par sa face de contact contre un rail de section en U. L'élément de serrage comprend, à cet égard, deux montants mécaniquement solidaires l'un de l'autre et qui s'étendent, dans un plan P, chacun de leur première extrémité vers leur deuxième extrémité selon deux directions divergentes. Les premières extrémités sont agencées pour permettre l'accroche de l'élément de serrage avec le rail par encliquetage, tandis que les deuxièmes extrémités comprennent chacune une butée latérale destinée à coopérer avec un des bords de maintien lorsque les deux montants sont insérés dans le passage par la face arrière.

L'invention concerne également un kit d'attache pourvu d'une pièce de maintien et d'un élément de serrage.

Enfin, la présente invention concerne également un système d'attache qui comprend au moins un kit d'attache et au moins un rail, notamment un rail de section en U.

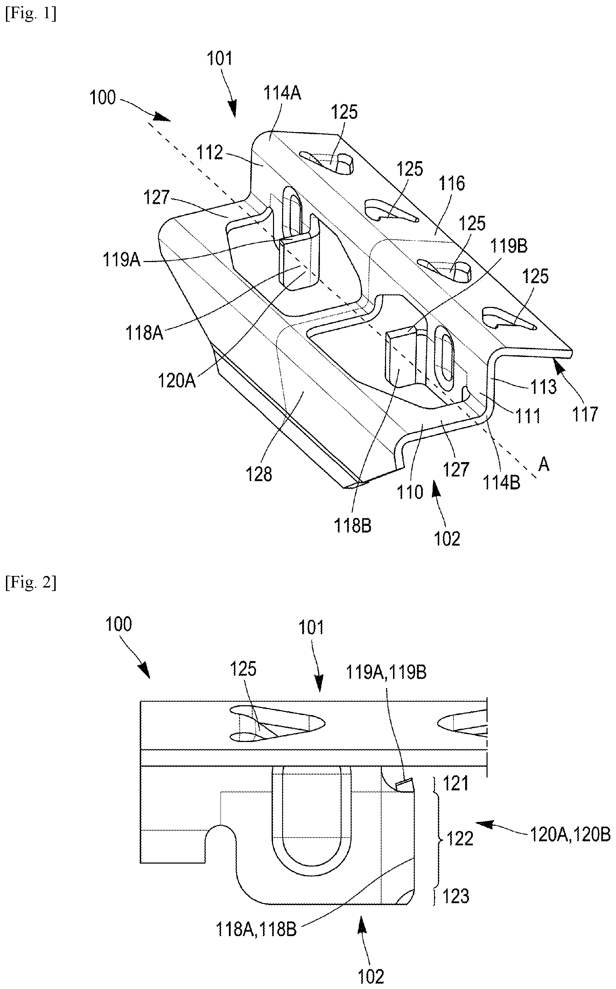

Sur la [Fig.1], on peut voir un premier exemple de réalisation d'une pièce de maintien 100 monobloc selon la présente invention.

La pièce de maintien 100 comprend une face avant 101 et une face arrière 102 opposée à la face avant.

La pièce de maintien 100 comprend une partie principale 110 qui s'étend selon un axe d'élongation A. En particulier, la partie principale 110 comprend une première paroi latérale 111 pourvue de deux faces essentiellement parallèles dites, respectivement, première face interne 112 et première face externe 113. Il est entendu, sans qu'il soit nécessaire de le préciser, que la première paroi latérale 111 forme un plan défini par un axe parallèle à l'axe d'élongation A et un autre axe, avantageusement perpendiculaire audit axe d'élongation A.

La première paroi latérale 111 comprend également un premier bord supérieur 114A qui s'étend parallèlement à l'axe d'élongation A et qui est opposé à la face arrière 102 de la pièce de maintien 100.

La partie principale 100 comprend également deux parois transversales 118A et 118B, perpendiculaires à l'axe d'élongation A. Les deux parois transversales 118A et 118B délimitent un passage ouvert par la face arrière 102 pour l'insertion d'un élément de serrage du kit d'attache. Les parois transversales 118A et 118B comprennent en outre un bord de maintien 119A, 119B formant un plan de maintien, opposé à la face arrière 102, et contre lequel l'élément de serrage, inséré dans le passage par la face arrière 102, est destiné à exercer un effort en direction de la dite face arrière 102.

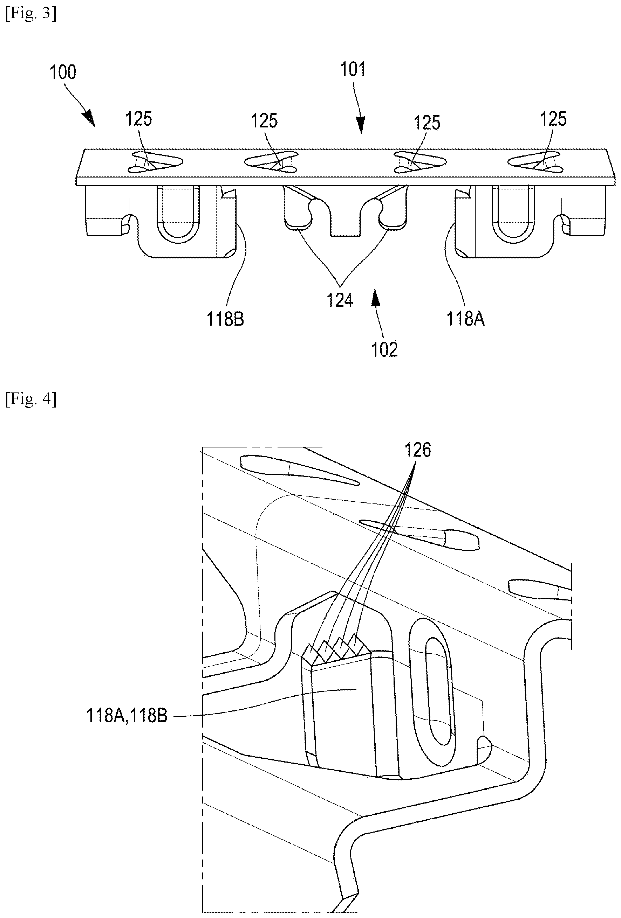

Chaque paroi transversale 118A et 118B peut comprendre des pointes, dites pointes de contact 126, en projection par rapport au plan de maintien ([Fig.4]).

De manière avantageuse, les parois transversales 118A et 118B s'étendent à partir de la première face interne 112. L'invention n'est toutefois par limitée à ce seul aspect et l'homme du métier pourra considérer des parois transversales 118A et 118B qui s'étendent chacune à partir de poutres 127 perpendiculaires à la première paroi latérale 111. Notamment ces poutres peuvent s'étendre à partir d'un premier bord inférieur 114B, opposé au premier bord supérieur 114A, de la première paroi latérale 111.

La pièce de maintien 100 peut comprendre une cale 128 liée aux poutres 127. La cale 128 prolonge notamment les poutres 127 par une de leur extrémité opposée au premier bord inférieur 114B, et est en projection par rapport à la face arrière 102.

De manière avantageuse, les parois transversales 118A et 118B comprennent chacune une face, dite face de guidage 120A et 120B, en regard l'une de l'autre, et délimitant le passage ouvert par la face arrière 102 ([Fig.1] et [Fig.2]).

Plus particulièrement, et tel qu'illustré à la [Fig.2], chaque face de guidage 120A et 120B comprend de son bord de maintien 119A et 119B vers un bord, dit bord d'entrée, opposé au bord de maintient une section de maintien 121, une section de guidage 122 et une section d'entrée 123. La section de guidage 122 est plane et perpendiculaire à l'axe d'élongation, et la section d'entrée 123 est de forme convexe de manière à limiter tout contact entre l'élément de serrage et une arrête dudit bord d'entrée lors de l'insertion de l'élément de serrage dans le passage par la face arrière 102.

De manière avantageuse, la section de maintien 121 est également de forme convexe de sorte que le plan de maintien n'est pas perpendiculaire à la section de guidage 122. Cet agencement doit permettre une meilleure accroche de l'élément de serrage décrit dans la suite de l'énoncé.

La pièce de maintien 100 comprend en outre une première aile latérale 116 prolongeant latéralement la partie principale 110 à partir du premier bord supérieur 114A. La première aile latérale 116 est notamment destinée à être en appui par une face d'appui 117 contre une face utile du panneau opposée à la face de contact dudit panneau. Il est entendu que la face d'appui 117 de la première aile latérale 116 est opposée à la face avant 101.

La première aile latérale 116 est préférentiellement plane. Toutefois la présente invention n'est pas limitée à cet aspect, et l'homme du métier pourra considérer une première aile latérale 116 non plane et plus particulièrement incurvée. Par exemple, la première aile latérale 116 présente, par la face avant, une forme convexe.

Il est entendu, sans qu'il soit nécessaire de le préciser, que les deux parois transversales 118A et 118B, d'une part, et la première aile latérale 116, d'autre part, sont disposées de part et d'autre de la première paroi latérale 111.

De manière avantageuse, l'angle entre la première paroi 111 latérale et la première aile latérale 116 est inférieur à 90°, avantageusement inférieur à 80°.

Toujours de manière avantageuse, la première aile latérale 116 comprend une ou plusieurs languettes pliées 125 se projetant vers la face arrière 102, et terminées par une pointe de manière à pouvoir griffer le panneau lorsque la première aile latérale 116 est en appui contre ledit panneau.

De manière avantageuse, tel qu'illustré à la [Fig.3], la première paroi 111 latérale peut également comprendre au moins une ailette de guidage 124 (par exemple deux ailettes de guidage) formée par une section pliée de la première paroi 111 latérale. L'au moins une ailette de guidage 124 est notamment agencée pour centrer et guider l'élément de serrage lors de son insertion dans le passage par la face arrière 102. Plus particulièrement, l'au moins une ailette de guidage 124 est orientée vers la face arrière 102 et pliée selon une direction opposée à la première face interne 112.

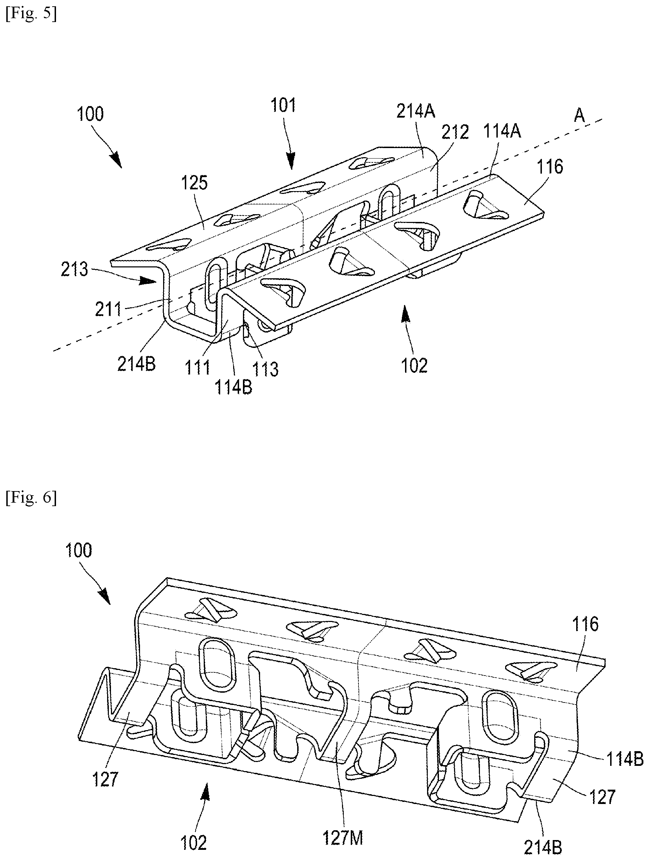

La [Fig.5] est une représentation d'un deuxième exemple de réalisation d'une pièce de maintien 100 monobloc selon la présente invention. Dans ce deuxième exemple, la pièce de maintien 100 reprend pour l'essentiel l'ensemble des caractéristiques décrites en relation avec le premier exemple. Selon ce deuxième exemple, la pièce de maintien 100 ne comprend toutefois pas la cale 128.

Selon ce deuxième exemple, la partie principale comprend une deuxième paroi 211 latérale. La deuxième paroi 211 présente une deuxième face interne 212 et une deuxième face externe 213 ainsi qu'un deuxième bord supérieur 214A parallèle à l'axe d'élongation A et opposé à une face arrière 102.

La pièce de maintien 100 selon ce deuxième exemple comprend également une deuxième aile 216 latérale en projection par rapport à la deuxième face externe 213 et qui prolonge la deuxième paroi 211 à partir de son deuxième bord supérieur 214A.

Plus particulièrement, la pièce de maintien 100 selon ce deuxième exemple est agencée de sorte que la première paroi 111 et la première aile latérale 116 sont le symétrique, respectivement, de la deuxième paroi 211 et de la deuxième aile 216 par rapport à un plan de symétrie médian à la première surface interne 112 et à la deuxième surface interne 212. De manière avantageuse, la première paroi 111 et la deuxième paroi 211 sont parallèles entre elles.

Toujours de manière avantageuse, les parois transversales 118A et 118B s'étendent entre la première surface interne 111 et la deuxième surface interne 212.

La pièce de maintien 100 peut également comprendre les poutres 127 et 127M qui assurent un lien mécanique fixe entre la première paroi 111 et la deuxième paroi 211 ( [Fig.6]).

Les poutres 127 et 127M sont disposées sur la face arrière 102 de la partie principale 110. Plus particulièrement, les poutres 127 et 127M relient le premier bord inférieur 114B à un deuxième bord inférieur 214B de la deuxième paroi et opposé au deuxième bord supérieur 214A.

De manière avantageuse, une poutre parmi les poutres 127, dite poutre de montage 127M, est disposée à mi-distance entre les deux parois transversales 118A et 118B.

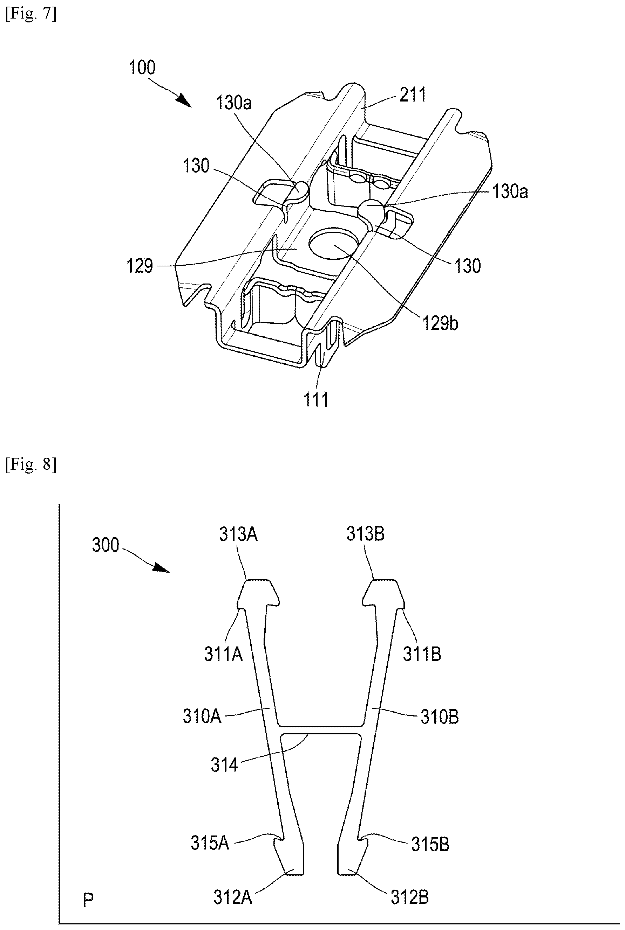

La [Fig.7] est une représentation d'un troisième exemple de réalisation d'une pièce de maintien 100 monobloc selon la présente invention. Dans ce troisième exemple, la pièce de maintien 100 reprend pour l'essentiel l'ensemble des caractéristiques du premier et/ou du deuxième exemple de réalisation de ladite pièce de maintien selon la présente invention. Selon ce troisième exemple, la pièce de maintien 100 comprend un fond de maintien 129 de forme essentiellement plane et qui s'étend perpendiculairement à la première paroi 111 et à partir de la première face interne 112. Plus particulièrement, le fond de maintien 129 comprend une ouverture traversante 129b et est disposé à mi-distance entre les deux parois transversales 118A et 118B.

Il est entendu que le fond de maintien 129 est considéré, dans ce troisième exemple, en lieu et place de la poutre de maintien 127M. A cet égard, dès lors que la deuxième paroi 211 principale, selon les termes du deuxième exemple, est considérée, le fond de maintien 129 relie mécaniquement ladite deuxième paroi 211 et la première paroi 111. Plus particulièrement, et selon ce dernier aspect, le fond de maintien 129 relie la première face interne 112 et la deuxième face interne 212.

En outre, le fond de maintien 129 peut être à distance du premier bord supérieur 114A et du deuxième bord supérieur 214A.

De manière particulièrement avantageuse, la pièce de maintien 100 selon ce troisième exemple peut comprendre des moyens captifs configurés pour rendre captif une vis ou un boulon inséré dans l'ouverture selon un sens allant de la face avant 101 vers la face arrière 102. A cet égard, les moyens captifs peuvent notamment comprendre deux languettes, dites respectivement, première languette 130 et deuxième languette 230, qui s'étendent, chacune selon un sens allant de la face arrière 102 vers la face avant 101, et en projection par rapport au fond de maintien 129. Plus particulièrement, la première languette 130 et la deuxième languette 230 sont diamétralement opposées par rapport à l'ouverture 129b. Par ailleurs, les extrémités libres de la première languette 130 et de la languette 230, dites, respectivement, première extrémité 130a et deuxième extrémité 230a sont intérieurement recourbées de manière à pouvoir retenir captif une vis ou un boulon inséré dans l'ouverture selon un sens allant de la face avant 101 vers la face arrière 102.

De manière avantageuse, la première languette et la deuxième languette sont obtenues par découpe, respectivement, de la première paroi et de la deuxième paroi. En d'autres termes, la première languette et la deuxième languette sont coplanaires, respectivement, de la première paroi et de la deuxième paroi.

Quel que soit l'exemple considéré, la pièce de maintien 100 peut être formée par emboutissage d'une feuille métallique, et notamment d'une feuille faite d'acier trempé par exemple du type C67S.

Décrit mais non revendiqué en soi est également un élément de serrage 300 monobloc destiné à coopérer avec la pièce de maintien 100.

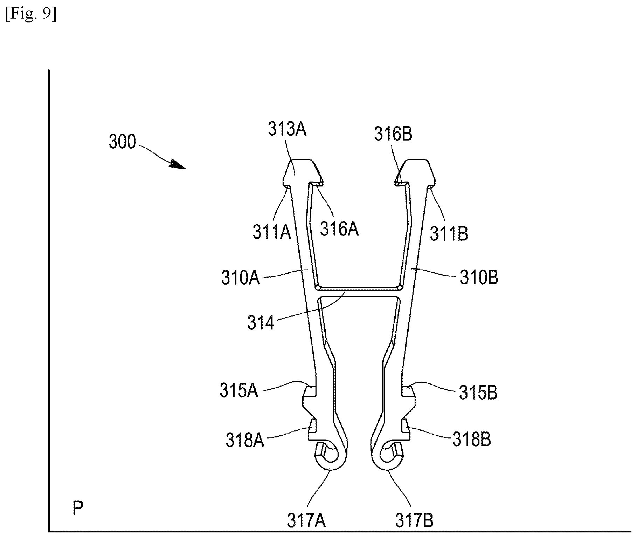

A cet égard, la [Fig.8] et la [Fig.9] représentent un élément de serrage 300 selon, respectivement, un premier et un deuxième mode de réalisation selon la présente invention.

Quel que soit l'exemple considéré, l'élément de serrage 300 comprend deux montants 310A et 310B, mécaniquement solidaires l'un de l'autre, et qui s'étendent, dans un plan P, chacun de leur première extrémité 312A, 312B vers leur deuxième extrémité 313A, 313B selon deux directions divergentes.

Par « deux directions divergentes », on entend deux directions portées par deux axes non parallèles. Plus particulièrement, les deux axes s'écartent l'un de l'autre de la première extrémité vers la deuxième extrémité.

L'élément de serrage 300 peut comprendre une poutre 314, qui s'étend dans le plan P, et qui maintient solidaires l'un de l'autre les deux montants 310A et 310B.

Les premières extrémités 312A et 312B sont agencées pour permettre l'accroche de l'élément de serrage 300 avec un rail, et plus particulièrement avec un rail présentant une section en U. Les premières extrémités 312A et 312B sont plus particulièrement agencées pour permettre l'accroche de l'élément de serrage 300 par encliquetage avec le rail. A cet égard, les première extrémités 312A et 312B comprennent des premiers moyens d'ancrage formés par des premières butées latérales 315A et 315B.

Les deuxièmes extrémités 313A et 313B sont pourvues de deuxièmes moyens d'encrage destinés à coopérer avec le bord de maintien 119A, 119B. En particulier, les deuxièmes moyens d'encrage sont agencés pour être en appui contre le bord de maintien 119A, 119B. A cet égard, les deuxièmes moyens d'encrage peuvent comprendre des deuxièmes butées latérales 311A, 311B.

Plus particulièrement, la première butée latérale 315A, 315B et la deuxième butée latérale 311A, 311B d'un même montant 310A, 310B sont en vis-à-vis l'une de l'autre.

Chaque montant peut comprendre au niveau de sa deuxième extrémité une butée de montage 316A, 316B. Notamment les deux butées de montage 316A et 316B s'étendent intérieurement à l'élément de serrage et sont, par voie de conséquence, convergentes.

Tel qu'illustré à la [Fig.9], et conformément au deuxième mode de réalisation, l'élément de serrage 300 comprend deux crochets de montage 317A, 317B repliés ou incurvés extérieurement.

L'élément de serrage 300 selon le deuxième mode de réalisation peut comprendre des moyens de pré montage permettant de fixer sans serrage l'élément de serrage 300 au rail afin de permettre un pré positionnement du panneau sur le rail.

Les moyens de pré montage peuvent notamment comprendre des butées de pré montage 318A et 318B agencées pour permettre un encliquetage de l'élément de serrage 300 dans le rail. A cet égard, la butée de pré montage 318A, 318B d'un montant donné est disposée entre la première butée latérale 315A, 315B et le crochet de montage du montant considéré. Par ailleurs, la butée de pré montage 318A, 318B d'un montant donné présentant la même orientation que la première butée latérale du montant considéré.

L'invention concerne également un kit d'attache qui comprend la pièce de maintien 100 et l'élément de serrage 300.

L'invention concerne également un système d'attache de panneaux qui comprend au moins un kit d'attache et au moins un rail.

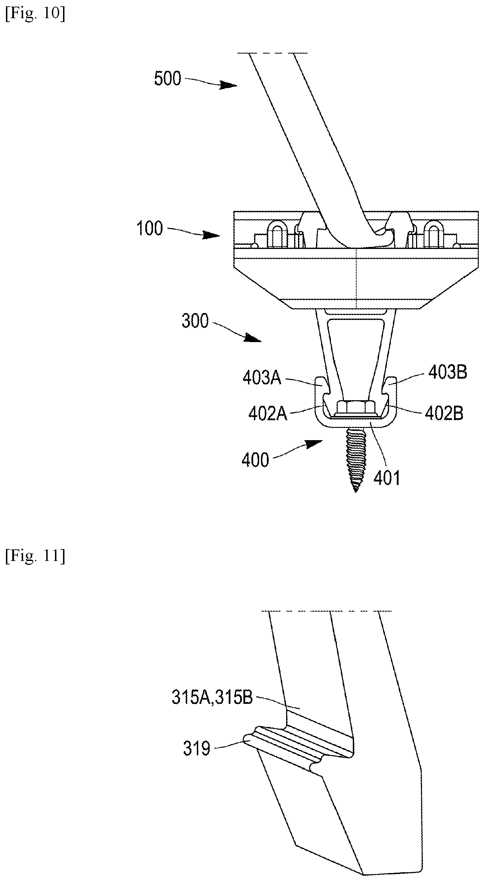

La [Fig.10] illustre le montage d'un panneau, notamment un panneau solaire, sur un rail 500 selon une configuration dite par le haut.

Le rail 500 comprend une section en U. A cet égard, le rail 500 comprend un fond 501 surmonté de murs latéraux 502A, 502b dont les bords, dits bords d'attache 503A, 503b, sont repliés ou enroulés intérieurement de manière à permettre l'encliquetage de l'élément de serrage 300 par ses premiers moyens d'ancrage (les premières butées latérales 315A, 315B).

Ainsi, le montage comprend notamment l'encliquetage de l'élément de serrage 300 par ses premiers moyens d'encrage au niveau des bords d'attache 503A et 503B du rail 500. Plus particulièrement, l'élément de serrage 300 est disposé à proximité d'un panneau (non représenté) reposant par une face, dite face de contact sur le rail. Notamment, l'élément de serrage 300 est disposé contre le contour du panneau.

Le montage comprend également la mise en place de la pièce de maintien 100 conforme au premier exemple. Lors de cette mise en place, la première aile latérale 116 est disposée à l'aplomb d'une face utile du panneau opposée à la face de contact. Par ailleurs, et toujours lors de cette mise en place, les deuxièmes extrémités de l'élément de serrage 300 sont insérées dans le passage ouvert par la face arrière 102 de la pièce de maintien 100.

Un outil de montage 500 est alors mis en œuvre de manière à mettre les deuxièmes moyens d'ancrage (les deuxièmes butées latérales 311A, 311B) en appui contre l'un et l'autre des bords de maintien 119A et 119B. L'outil de montage 500 peut comprendre un levier terminé par une de ses exterminés par un crochet, et est adapté pour exercer un effort sur l'une et l'autre des butées de montage 316A et 316B par appui sur la poutre de montage 127M. Si le bord de maintien 119A, 119B comprend les pointes de contact 126, ces dernières sont susceptibles de perforer une couche d'oxyde passivant la surface de l'élément de serrage et ainsi permettre un meilleur contact électrique.

La contact électrique entre le rail et l'élément de serrage peut, pour sa part, être améliorer en formant une arrête saillante 319 sur la première butée latérale ([Fig.11]). L'arrête saillante 319 est notamment susceptible d'être écrasée contre le rail lors de l'encliquetage de l'élément de serrage dans ledit rail, et permet ainsi d'établir un meilleurs contact électrique entre ledit rail et ledit élément de serrage.

Dès lors que l'élément de serrage 300 est encliqueté dans le rail 400 et que les deuxièmes moyens d'ancrage sont en appui contre les bords de maintien, ledit élément de serrage 300 se trouve en tension, et, par voie de conséquence, exerce un effort sur les bords de maintien 119A et 119B. Cet effort se traduit par un serrage du panneau entre la première aile latérale 116 et le rail 400.

Plus particulièrement, la première aile latérale, en appui contre la face utile du panneau, maintient ce dernier en appui contre le rail 400. La considération des languettes pliées 125 permet de griffer le châssis du panneau et ainsi établir un meilleur contact électrique entre la pièce de maintien et le panneau.

L'amélioration des contacts électriques avec les languette pliées 125, les points de contacts 126 et les arrêtes saillante 319 peut avantageusement mise à profit pour une mise à la terre du panneau.

Un tel agencement présente une sensibilité moindre au regard des variations de température et offre ainsi un serrage plus pérenne que celui exercé au moyen d'une vis ou d'un boulon.

Par ailleurs, l'étendue de la première aile latérale permet une meilleure répartition de l'effort de maintien sur la face utile du panneau.

Enfin, la configuration proposée dans la présente invention permet de considérer des rails d'une largeur raisonnable.

Le montage illustré à la [Fig.10] pourrait également mettre en œuvre une pièce de maintien conforme au deuxième exemple afin que ladite pièce maintienne au moyen de sa première aile un premier panneau, et au moyen de sa deuxième aile un deuxième panneau adjacent au premier panneau.

Ce mode de montage est particulièrement adapté dès lors qu'il s'agit de fixer des panneaux, et notamment des panneaux solaires sur un toit.

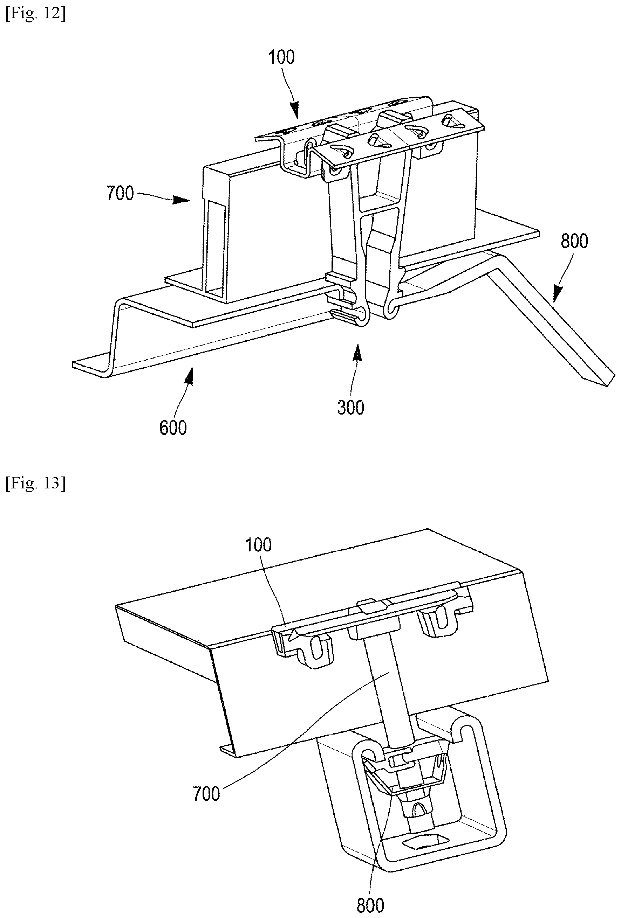

La [Fig.12] illustre le montage d'un panneau, notamment un panneau solaire, sur un rail 600 selon une configuration dite par le bas. Le montage illustré à la [Fig.12] met en œuvre l'élément de serrage selon le deuxième mode de réalisation.

Le rail 600 comprend notamment des moyens d'encliquetage pour permettre l'insertion par encliquetage de l'élément de serrage 300. En particulier, le montage comprend la mise en place dans une position, dite de pré montage, de l'élément de serrage 300 dans le rail 600. Notamment, l'élément de serrage 300 est encliqueté au moyen de ces butées de montage 316A et 316B dans le rail 600.

La pièce de maintien 100 est également est également mise en place. Lors de cette mise en place, la première aile latérale 116 est disposée à l'aplomb d'une face utile du panneau 700 opposée à la face de contact. Par ailleurs, et toujours lors de cette mise en place, les deuxièmes extrémités de l'élément de serrage 300 sont insérées dans le passage ouvert par la face arrière 102 de la pièce de maintien 100. En particulier, cette mise en place est exécutée de manière à mettre les deuxièmes moyens d'ancrage (les deuxièmes butées latérales 311A, 311B) en appui contre l'un et l'autre des bords de maintien 119A et 119B.

Un outil de montage 800 est alors mis en œuvre de manière à encliqueter, au moyen des premiers moyens d'ancrage (les premières butées latérales 315A, 315B), l'élément de serrage dans le rail 600.

L'outil de montage 800 peut comprendre un levier dont une de ses exterminés est agencée pour coopérer avec l'un et l'autre des crochets de montage 317A, 317B. Notamment, l'outil de montage 800 est adapté pour exercer un effort sur l'un et l'autre des crochets de montage 317A, 317B.

Dès lors que l'élément de serrage 300 est encliqueté dans le rail 500 et que les deuxièmes moyens d'ancrage sont en appui contre les bords de maintien, ledit élément de serrage 300 se trouve en tension, et, par voie de conséquence, exerce un effort sur les bords de maintien 119A et 119B. Cet effort se traduit par un serrage du panneau entre la première aile latérale 116 et le rail 500.

Plus particulièrement, la première aile latérale, en appui contre la face utile du panneau, maintient ce dernier serré contre le rail 500.

Le montage illustré à la [Fig.12], à l'instar de celui de la [Fig.10], peut également mettre en œuvre les pointes de contact 126, les arrêtes saillantes 319, et les languettes pliées 125.

Le montage illustré à la [Fig.12] met en œuvre une pièce de maintien conforme au deuxième exemple de sorte ladite pièce maintienne, au moyen de sa première aile latérale, un premier panneau, et au moyen de sa deuxième aile un deuxième panneau adjacent au premier panneau.

Toutefois, une pièce de maintien conforme au premier exemple ou au troisième exemple peut également être envisagée.

De manière alternative, et dès lors qu'une pièce de maintien conforme au troisième exemple est envisagée, il est possible de considérer ladite pièce de maintien à un rail au moyen d'une vis ou d'un boulon et d'un élément d'ancrage.

A cet égard, la [Fig.13] est une illustration de la coopération entre une pièce de maintien 100, d'un boulon 700 et d'un élément d'ancrage 800 pour le maintien d'un panneau photovoltaïque sur un rail 900. Notamment, le boulon 700 est inséré dans l'ouverture 129b et coopère par vissage avec l'élément d'ancrage 800. L'élément d'ancrage est pour sa part retenu dans une rainure, dite rainure principale du rail, de sorte que le boulon, formant un tirant, se trouve en tension et impose ainsi à la première aile latérale de la pièce de maintien 100 un effort d'appui contre le cadre d'un panneau photovoltaïque adjacent.

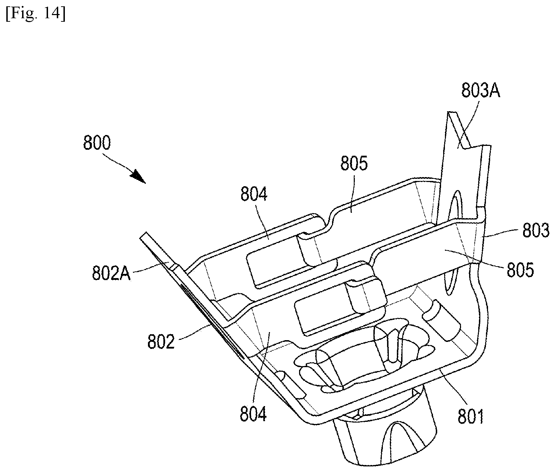

Selon un exemple non limitatif et tel qu'illustré à la [Fig.14], l'élément d'ancrage 800 peut comprendre une plaque principale 801 essentiellement plane ainsi que deux ailes latérales 802 et 803 prolongeant latéralement la plaque principale 801 par deux côtés opposés, dits côtés latéraux. Notamment, les deux ailes latérales 802 et 803 s'étendent de manière divergeante chacune vers leur extrémité de contact 802A et 803A.

Enfin, l'élément d'ancrage comprend également deux éléments de maintien reliant directement les deux ailes latérales 802 et 803, et configurés pour s'opposer à un effort d'écartement susceptible d'être exercé sur les deux ailes latérales 802 et 803. A cet égard, un élément de maintien peut comprendre deux languettes dites, respectivement, première languette 804 et deuxième languette 805, qui s'étendent, perpendiculairement aux côtés latéraux, l'une vers l'autre, chacune à partir d'une aile latérale802 et 803. Notamment, la première languette 804 et la deuxième languette 805 comprennent des moyens d'arrêt disposés aux extrémités libres de l'une et l'autre des languettes et configurés pour s'opposer à l'écartement des deux ailes latérales 802 et 803 dès lors qu'un effort d'écartement est imposé audites ailes latérales 802 et 803. Plus particulièrement, les moyens d'arrêt comprennent un crochet 805A et une fenêtre 804. Le crochet 805A est disposé à l'extrémité libre de la languette 805, tandis que la fenêtre 804A est disposée à l'extrémité libre de la languette 804. Le crochet 805A est engagé dans la fenêtre qui présente avantageusement une forme rectangulaire.

Décrit mais non revendiqué est également un procédé de montage de panneaux photovoltaïques sur des rails. Notamment, le procédé comprend la mise en place d'un premier panneau sur des rails et la solidarisation dudit panneau sur lesdits rails au moyen d'éléments de serrage et de pièces de maintien. Plus particulièrement, les pièces de maintien mises en œuvre pour maintenir le premier panneau sur les rails voient leur première aile latérale mise en appui contre le cadre périphérique du premier panneau au moyen d'éléments de serrage.

La procédé comprend le positionnement d'un deuxième panneau photovoltaïque et en position adjacente au premier panneau photovoltaïque. Plus particulièrement, le deuxième panneau est, dans un premier temps, engagé, en oblique, par un côté de son cadre périphérique sous la ou les deuxièmes ailes latérales des pièces de maintien en appui par leurs premières ailes latérales contre le cadre périphérique du premier panneau. Dans un second temps, le deuxième panneau photovoltaïque est rabattu parallèlement au premier panneau photovoltaïque de manière à être serré contre la rail par les pièces de maintien considérées.

Bien sûr, l'invention n'est pas limitée aux modes de réalisation décrits et on peut y apporter des variantes de réalisation sans sortir du cadre de l'invention tel que défini par les revendications.

## Revendications

1. Pièce de maintien (100), préformée et monobloc, d'un kit d'attache destinée à maintenir un panneau serré par une de ses faces, dite face de contact, contre un rail, la pièce de maintien (100) comprend :
- une partie principale (110) s'étendant selon un axe d'élongation A, et qui comprend une première paroi (111) latérale, la première paroi (111) latérale présentant une première face interne (112) et une première face externe (113) ainsi qu'un premier bord supérieur (114A) parallèle à l'axe d'élongation A et opposé à une face arrière (102) de la partie principale (110), la partie principale comprend en outre deux parois transversales (118A, 118B), perpendiculaires à l'axe d'élongation et qui délimitent un passage ouvert par la face arrière (102) pour l'insertion d'un élément de serrage du kit d'attache, les parois transversales comprennent en outre un bord de maintien (119A, 119B) définissant un plan de maintien, opposé à la face arrière (102), et contre lequel l'élément de serrage inséré par la face arrière (102) est destiné à exercer un effort en direction de la dite face arrière (102);
**caractérisé en ce que** la pièce de maintien (100) comprend
une première aile latérale (116) prolongeant latéralement la partie principale (110) à partir du premier bord supérieur (114A), la première aile latérale (116) étant destinée à être en appui par une face d'appui (117) contre une face utile du panneau opposée à la face de contact ;avantageusement, les faces des parois transversales (118A, 118B) en regard l'une de l'autre, dites faces de guidage (120A, 120B), comprennent chacune, du bord de maintien vers un bord d'entrée opposé au bord de maintien, une section de maintien (121), une section de guidage (122) et une section d'entrée (123), la section de guidage (122) est plane et perpendiculaire à l'axe d'élongation, et la section d'entrée (123) est de forme convexe de manière à limiter tout contact entre de l'élément de serrage et une arrête dudit bord d'entrée lors de l'insertion de l'élément de serrage dans le passage par la face arrière (102) ; encore plus avantageusement, la section de maintien (121) est également de forme convexe de sorte que le plan de maintien n'est pas perpendiculaire la section de guidage (122).

2. Pièce de maintien (100) selon la revendication 1, dans laquelle la section de maintien (121) comprend, en projection par rapport au plan de maintien, des pointes de contact (126)

3. Pièce de maintien (100) selon la revendication 1 ou 2, dans laquelle la première paroi (111) latérale comprend également au moins une ailette de guidage (124) formée par une section pliée de la première paroi (111) latérale et agencée pour centrer et guider l'élément de serrage lors de son insertion dans le passage par la face arrière (102), avantageusement, l'au moins une ailette de guidage (124) est orientée vers la face arrière (102) et pliée selon une direction opposée à la première face interne (112).

4. Pièce de maintien (100) selon l'une des revendications 1 à 3, dans laquelle l'angle entre la première paroi (111) latérale et la première aile latérale (116) est inférieur à 90°.

5. Pièce de maintien (100) selon l'une des revendications 1 à 4, dans laquelle la première aile latérale (116) comprend une ou plusieurs languettes pliées (125) se projetant vers la face arrière (102), et terminées par une pointe de manière à pouvoir griffer le panneau lorsque la première aile latérale (116) est en appui contre ledit panneau.

6. Pièce de maintien (100) selon l'une des revendications 1 à 5, dans laquelle la partie principale (110) comprend une deuxième paroi (211) latérale présentant une deuxième face interne et une deuxième face externe ainsi qu'un deuxième bord supérieur (214A) parallèle à l'axe d'élongation et opposé à une face arrière (102) de la partie principale (110), une deuxième aile (216) latérale est par ailleurs disposée en projection par rapport à la deuxième face externe et prolonge la deuxième paroi latérale à partir de son deuxième bord supérieur, avantageusement, ladite pièce de maintien (100) est agencée de sorte que la première paroi (111) latérale et la première aile latérale (116) sont le symétrique, respectivement, de la deuxième paroi latérale et de la deuxième aile par rapport à un plan de symétrie médian à la première surface interne et à la deuxième surface interne, plus avantageusement, la première paroi (111) latérale et la deuxième paroi latérale sont parallèles entre elles.

7. Pièce de maintien (100) selon la revendication 6, dans laquelle les parois transversales s'étendent entre la première surface interne et la deuxième surface interne.

8. Pièce de maintien (100) selon la revendication 6 ou 7, dans laquelle des poutres assurent un lien mécanique fixe entre la première paroi (111) latérale et la deuxième paroi latérale, avantageusement, les poutres (127) sont disposées sur la face arrière de la partie principale, encore plus avantageusement, une poutre parmi les poutres (127), dite poutre de montage (127M) est disposée à mi-distance entre les deux parois transversales.

9. Pièce de maintien (100) selon l'une des revendications 6 à 8, dans laquelle ladite pièce de maintien (100) comprend un fond de maintien (129) de forme plane et qui s'étend, à partir de et perpendiculairement à la première face interne (112), avantageusement, le fond de maintien (129) comprend une ouverture traversante (129b).

10. Pièce de maintien (100) selon la revendication 9 en combinaison avec la revendication 9, dans laquelle le fond de maintien (129) relie la première face interne avec la deuxième face interne, avantageusement, ladite pièce de maintien (100) comprend des moyens, dits moyens captifs, configurés pour rendre captif un boulon ou une vis inséré dans l'ouverture traversante selon un sens allant de la face avant vers la face arrière, plus avantageusement, les moyens captifs comprennent une première languette (130) et une deuxième languette (230) qui s'étendent selon un sens allant de la face arrière vers la face avant et en projection par rapport au fond de maintien (129).

11. Kit d'attache qui comprend :
- une pièce de maintien (100) selon l'une des revendications 1 à 10
- un élément de serrage (300) monobloc destiné à coopérer avec la pièce de maintien (100) selon l'une des revendications 1 à 10 pour le serrage d'un panneau par sa face de contact contre un rail de section en U, l'élément de serrage (300) comprenant deux montants (310A, 310B) mécaniquement solidaires l'un de l'autre et qui s'étendent, dans un plan P, chacun de leur première extrémité (312A, 312B) vers leur deuxième extrémité (313A, 313B) selon deux directions divergentes, les premières extrémités comprennent des premiers moyens d'ancrage agencées pour permettre l'accroche de l'élément de serrage (300) avec le rail par encliquetage, tandis que les deuxièmes extrémités comprennent des deuxièmes moyens d'ancrage destinés à coopérer avec un des bords de maintien lorsque les deux montants sont insérés dans le passage par la face arrière (102).

12. Système d'attache de panneaux qui comprend au moins un kit d'attache selon la revendication 11 et au moins un rail de section en U.

13. Surface plane pourvue d'un ensemble de panneaux agencés de manière matricielle sur des rails régulièrement espacés et parallèles entres eux, chaque panneau étant serré contre un rail sur lequel il repose au moyen d'un kit d'attache selon la revendication 11.

## Patentansprüche

1. Vorgeformtes, einteiliges Halteteil (100) eines Befestigungskits, das dazu bestimmt ist, eine Platte an einer ihrer Seiten, der sogenannten Kontaktseite, gegen eine Schiene zu drücken; wobei das Halteteil (100) Folgendes umfasst:
- ein Hauptteil (110), der sich entlang einer Längsachse A erstreckt und eine erste Seitenwand (111) umfasst, wobei die erste Seitenwand (111) eine erste Innenfläche (112) und eine erste Außenfläche (113) sowie eine erste Oberkante (114A) aufweist, die parallel zur Längsachse A verläuft und einer Rückseite (102) des Hauptteils (110) gegenüberliegt, wobei der Hauptteil weiter zwei Querwände (118A, 118B) umfasst, die senkrecht zur Längsachse stehen und einen durch die Rückseite (102) offenen Durchgang zum Einführen eines Klemmelements des Befestigungskits begrenzen, wobei die Querwände weiter eine Haltekante (119A, 119B) umfassen, die eine Halteebene definieren, der Rückseite (102) gegenüberliegen und gegen die das durch die Rückseite (102) eingeführte Klemmelement eine Kraft in Richtung der genannten Rückseite (102) ausüben soll;
**dadurch gekennzeichnet, dass** das Halteteil (100) einen ersten Seitenflügel (116) umfasst, der den Hauptteil (110) ausgehend von der ersten Oberkante (114A) seitlich verlängert, wobei der erste Seitenflügel (116) dazu bestimmt ist, mit einer Auflagefläche (117) an einer der Kontaktfläche gegenüberliegenden Nutzfläche der Platte anzuliegen; vorteilhafterweise die Flächen der Querwände (118A, 118B), die einander gegenüberliegen und als Führungsflächen (120A, 120B) bezeichnet werden, jeweils vom Haltekantenende bis zu einer dem Haltekantenende gegenüberliegenden Einführkante einen Halteabschnitt (121), einen Führungsabschnitt (122) und einen Einführabschnitt (123) umfassen, wobei der Führungsabschnitt (122) eben und senkrecht zur Verlängerungsachse ist und der Einführabschnitt (123) konvex geformt ist, um jeglichen Kontakt zwischen dem Klemmelement und einer Kante des Einführrandes beim Einführen des Klemmelements in den Durchgang durch die Rückseite (102) zu begrenzen; noch vorteilhafter, dass der Halteabschnitt (121) ebenfalls konvex geformt ist, so dass die Halteebene nicht senkrecht zum Führungsabschnitt (122) steht.

2. Halteteil (100) nach Anspruch 1, wobei der Halteabschnitt (121) in der Projektion auf die Halteebene Kontaktstifte (126) umfasst

3. Halteteil (100) nach Anspruch 1 oder 2, wobei die erste Seitenwand (111) zudem mindestens eine Führungsrippe (124) umfasst, die durch einen gebogenen Abschnitt der ersten Seitenwand (111) gebildet ist und dazu dient, das Klemmelement beim Einführen in den Durchgang von der Rückseite (102) her zu zentrieren und zu führen, vorzugsweise die mindestens eine Führungsrippe (124) zur Rückseite (102) hin ausgerichtet und in einer Richtung gebogen ist, die der ersten Innenseite (112) entgegengesetzt ist.

4. Halteteil (100) nach einem der Ansprüche 1 bis 3, wobei der Winkel zwischen der ersten Seitenwand (111) und dem ersten Seitenflügel (116) kleiner als 90° ist.

5. Halteteil (100) nach einem der Ansprüche 1 bis 4, wobei der erste Seitenflügel (116) eine oder mehrere gebogene Laschen (125) umfasst, die zur Rückseite (102) hin vorstehen und in einer Spitze enden, so dass sie in die Platte eingreifen können, wenn der erste Seitenflügel (116) an der Platte anliegt.

6. Halteteil (100) nach einem der Ansprüche 1 bis 5, wobei der Hauptteil (110) eine zweite Seitenwand (211) umfasst, die eine zweite Innenseite und eine zweite Außenseite sowie einen zweiten oberen Rand (214A) aufweist, der parallel zur Längsachse verläuft und einer Rückseite (102) des Hauptteils (110) gegenüberliegt, weiterhin ein zweiter Seitenflügel (216) von der zweiten Außenfläche vorstehend angeordnet ist und die zweite Seitenwand von deren zweiter Oberkante aus verlängert ist, vorteilhafterweise, das genannte Halteteil (100) so ausgebildet ist, dass die erste Seitenwand (111) und der erste Seitenflügel (116) jeweils das Spiegelbild der zweiten Seitenwand und des zweiten Seitenflügels in Bezug auf eine Symmetrieebene sind, die durch die erste Innenfläche und die zweite Innenfläche verläuft, vorteilhafterweise die erste Seitenwand (111) und die zweite Seitenwand parallel zueinander sind.

7. Halteteil (100) nach Anspruch 6, wobei sich die Querwände zwischen der ersten Innenfläche und der zweiten Innenfläche erstrecken.

8. Halteteil (100) nach Anspruch 6 oder 7, wobei Tragbalken eine feste mechanische Verbindung zwischen der ersten Seitenwand (111) und der zweiten Seitenwand herstellen, vorzugsweise die Tragbalken (127) an der Rückseite des Hauptteils angeordnet sind, und noch vorteilhafter ist, dass ein Tragbalken der Tragbalken (127), der sogenannte Montagetragbalken (127M), in der Mitte zwischen den beiden Querwänden angeordnet ist.

9. Halteteil (100) nach einem der Ansprüche 6 bis 8, wobei das Halteteil (100) einen flächigen Halteboden (129) umfasst, der sich von der ersten Innenseite (112) aus und senkrecht zu dieser erstreckt; vorzugsweise der Halteboden (129) eine Durchgangsöffnung (129b) umfasst.

10. Halteteil (100) nach Anspruch 9 in Verbindung mit Anspruch 9, wobei der Halteboden (129) die erste Innenseite mit der zweiten Innenseite verbindet; vorteilhafterweise wobei das Halteteil (100) Mittel umfasst, sogenannte Sicherungsmittel, die so ausgebildet sind, dass sie eine in die Durchgangsöffnung in Richtung von der Vorderseite zur Rückseite eingeführte Schraube oder Bolzen sichern; noch vorteilhafter, wobei die Sicherungsvorrichtungen eine erste Lasche (130) und eine zweite Lasche (230) umfassen, die sich in einer Richtung von der Rückseite zur Vorderseite erstrecken und gegenüber dem Halteboden (129) vorstehen.

11. Befestigungskit, umfassend:
- ein Halteteil (100) nach einem der Ansprüche 1 bis 10
- ein einteiliges Klemmelement (300), das dazu bestimmt ist, mit dem Halteteil (100) nach einem der Ansprüche 1 bis 10 zusammenzuwirken, um eine Platte an ihrer Kontaktfläche gegen eine U-Profilschiene zu klemmen, wobei das Klemmelement (300) zwei Pfosten (310A, 310B) umfasst, die mechanisch miteinander verbunden sind und sich in einer Ebene P jeweils von ihrem ersten Ende (312A, 312B) zu ihrem zweiten Ende (313A, 313B) in zwei auseinanderlaufenden Richtungen erstrecken, wobei die ersten Enden erste Verankerungsmittel umfassen, die so ausgebildet sind, dass sie das Einrasten des Klemmelements (300) in die Schiene ermöglichen, während die zweiten Enden zweite Verankerungsmittel umfassen, die dazu bestimmt sind, mit einer der Haltekanten zusammenzuwirken, wenn die beiden Pfosten von der Rückseite (102) her in den Durchgang eingeführt werden.

12. Befestigungssystem für Platten, das mindestens einen Befestigungskit nach Anspruch 11 und mindestens eine U-Profilschiene umfasst.

13. Ebene Fläche, die mit einer Anordnung von Platten versehen ist, die in einer Matrixanordnung auf regelmäßig beabstandeten und zueinander parallelen Schienen angeordnet sind, wobei jede Platte mittels eines Befestigungskits nach Anspruch 11 gegen eine Schiene geklemmt ist, auf der sie aufliegt.

## Claims

1. Holding part (100), preformed and one-piece, for a fastening kit intended to hold a panel clamped by one of its faces, called contact face, against a rail, the holding part (100) comprises:
- a main portion (110) that extends along an elongation axis A, and which comprises a first side wall (111), the first side wall (111) having a first inner face (112) and a first outer face (113) as well as a first upper edge (114A) parallel to the elongation axis A and opposite a rear face (102) of the main portion (110), the main portion further comprises two transverse walls (118A, 118B), perpendicular to the elongation axis and which define a passage open at the rear face (102) for the insertion of a clamping element of the fastening kit, the transverse walls further comprise a holding edge (119A, 119B) defining a holding plane, opposite the rear face (102), and against which the clamping element inserted through the rear face (102) is intended to exert a force in the direction of said rear face (102);
**characterised in that** the holding part (100) comprises
a first side flange (116) extending the main portion (110) laterally from the first upper edge (114A), the first side flange (116) being intended to bear through a bearing face (117) against a useful face of the panel opposite the contact face; advantageously, the faces of the transverse walls (118A, 118B) facing one another, called guiding faces (120A, 120B), each comprise, from the holding edge to an entry edge opposite the holding edge, a holding section (121), a guiding section (122) and an entry section (123), the guiding section (122) is flat and perpendicular to the elongation axis, and the entry section (123) is convex-shaped, so as to limit any contact between the clamping element and a ridge of said entry edge during the insertion of the clamping element into the passage through the rear face (102); even more advantageously, the holding section (121) is also convex-shaped, such that the holding plane is not perpendicular to the guiding section (122).

2. Holding part (100) according to claim 1, wherein the holding section (121) comprises, projecting with respect to the holding plane, contact tips (126)

3. Holding part (100) according to claim 1 or 2, wherein the first side wall (111) also comprises at least one guiding flange (124) formed by a folded section of the first side wall (111) and arranged to centre and guide the clamping element during its insertion into the passage through the rear face (102), advantageously, the at least one guiding flange (124) is oriented towards the rear face (102) and folded along a direction opposite the first inner face (112).

4. Holding part (100) according to any one of claims 1 to 3, wherein the angle between the first side wall (111) and the first side flange (116) is less than 90°.

5. Holding part (100) according to any one of claims 1 to 4, wherein the first side flange (116) comprises one or more folded strips (125) projecting towards the rear face (102), and ended by a tip, so as to be able to scratch the panel when the first side flange (116) bears against said panel.

6. Holding part (100) according to any one of claims 1 to 5, wherein the main portion (110) comprises a second side wall (211) having a second inner face and a second outer face, as well as a second upper edge (214A) parallel to the elongation axis and opposite a rear face (102) of the main portion (110), a second side flange (216) is moreover disposed projecting with respect to the second outer face and extends the second side wall from its second upper edge, advantageously, said holding part (100) is arranged, such that the first side wall (111) and the first side flange (116) are symmetrical, respectively, of the second side wall and of the second flange with respect to the median symmetry plane at the first inner surface and at the second inner surface, more advantageously, the first side wall (111) and the second side wall are parallel to one another.

7. Holding part (100) according to claim 6, wherein the transverse walls extend between the first inner surface and the second inner surface.

8. Holding part (100) according to claim 6 or 7, wherein beams ensure a fixed mechanical connection between the first side wall (111) and the second side wall, advantageously, the beams (127) are disposed on the rear face of the main portion, even more advantageously, a beam from among the beams (127), called mounting beam (127M) is disposed halfway between the two transverse walls.

9. Holding part (100) according to any one of claims 6 to 8, wherein said holding part (100) comprises a flat-shaped holding bottom (129), and which extends, from and perpendicularly to the first inner face (112), advantageously, the holding bottom (129) comprises a transverse opening (129b).

10. Holding part (100) according to claim 9 combined with claim 9, wherein the holding bottom (129) connects the first inner face with the second inner face, advantageously, said holding part (100) comprises means, called captive means, configured to make a bolt or a screw inserted in the through opening captive, along a direction going from the front face to the rear face, more advantageously, the captive means comprise a first strip (130) and a second strip (230) which extend along a direction going from the rear face to the front face, and projecting with respect to the holding bottom (129).

11. Fastening kit which comprises:
- a holding part (100) according to any one of claims 1 to 10,
- a one-piece clamping element (300) intended to engage with the holding part (100) according to any one of claims 1 to 10 for the clamping of a panel through its contact face against a U-shaped section rail, the clamping element (300) comprising two uprights (310A, 310B), mechanically secured to one another, and which extend, in a plane P, each of their first end (312A, 312B) to their second end (313A, 313B) along two divergent directions, the first ends comprise first anchoring means arranged to enable the fastening of the clamping element (300) with the rail by snap-fastening, while the second ends comprise second anchoring means intended to engage with one of the holding edges, when the two uprights are inserted in the passage through the rear face (102).

12. Panel fastening system which comprises at least one fastening kit according to claim 11, and at least one U-shaped section rail.

13. Flat surface provided with a set of panels arranged in a matrix on rails which are regularly spaced apart and parallel to one another, each panel being clamped against a rail on which it rests through one fastening kit according to claim 11.
